# FASCICULE DE BREVET EUROPEEN

(11) **EP 1 797 357 B1**
(45) Date de publication et mention de la délivrance du brevet: **31.03.2010**
(21) Numéro de dépôt: 05805799.3
(22) Date de dépôt: 22.09.2005
(51) Int. Cl.: F16H 61/02

(54) **DISPOSITIF DE TRANSMISSION POUR AUXILIAIRE OU ACCESSOIRE DE MOTEUR A VITESSE VARIABLE, MOTEUR AINSI EQUIPE ET APPLICATIONS**
GETRIEBE FÜR MOTORHILFSGERÄT ODER ZUBEHÖR MIT VARIABLER GESCHWINDIGKEIT, DAMIT AUSGERÜSTETER MOTOR UND ANWENDUNGEN
TRANSMISSION DEVICE FOR VARIABLE SPEED MOTOR ANCILLARY OR ACCESSORY, MOTOR EQUIPPED WITH SAME AND APPLICATIONS

(30) Priorité: 23.09.2004 FR 0410083
(43) Date de publication de la demande: 20.06.2007
(73) Titulaire: Antonov Automotive Technologies Limited, Heathcote Industrial Estate Warwick Warwickshire CV34 6LX (GB)
(72) Inventeur: ANTONOV, Roumen, F-75006 Paris (FR)
(74) Mandataire: Pontet, Bernard
(86) Numéro de dépôt international: PCT/FR2005/002349
(87) Numéro de publication internationale: WO 2006/032790

(56) Documents cités:
- EP-A- 0 317 214
- WO-A-89/11405
- DE-A1- 2 303 562
- FR-A- 2 668 231
- GB-A- 795 019
- US-A- 5 011 464

## Description

La présente invention concerne un dispositif de transmission à au moins deux rapports pour entraîner un appareil à partir d'un moteur à vitesse variable, en particulier pour entraîner par exemple un compresseur de suralimentation, un compresseur de climatisation, ou encore une machine électrique, à partir d'un moteur, typiquement un moteur thermique, d'un véhicule automobile.

La présente invention concerne également un moteur thermique suralimenté équipé d'un dispositif de transmission selon l'invention.

La présente invention concerne en outre diverses applications du dispositif de transmission selon l'invention.

Les appareils du type indiqué ci-dessus sont typiquement entraînés par une courroie à partir de l'arbre du moteur du véhicule. L'appareil est donc soumis aux variations de vitesse de rotation du moteur du véhicule. Or, ce genre d'appareil a souvent une plage de fonctionnement efficace relativement étroite, plus étroite que la plage des vitesses de rotation d'un moteur de véhicule. Il est donc impossible avec un seul rapport de transmission entre le moteur d'entraînement et l'appareil, d'assurer un fonctionnement constamment optimal de l'appareil.

Par conséquent, le rapport de transmission est habituellement choisi pour tenir compte d'une part de la vitesse de rotation maximale de l'appareil, qui ne doit pas être dépassée, notamment lorsque le moteur fonctionne au voisinage de sa vitesse de rotation maximale, et d'autre part pour que la vitesse de fonctionnement de l'appareil soit optimale lorsque le moteur fonctionne à son régime (vitesse de rotation) le plus usuel.

Cependant, avec un tel réglage, l'appareil a souvent une efficacité très diminuée lorsque le moteur fonctionne au ralenti ou à régime très bas. Ceci est très désavantageux en pratique. Par exemple, le besoin de climatisation dans un véhicule est plus grand lorsque la vitesse de déplacement est très faible ou nulle. Autres exemples, pour qu'un moteur thermique ait une courbe caractéristique favorable de son couple moteur en fonction du régime de rotation, on souhaite en général que le couple soit élevé pour un régime de rotation relativement bas. En ce qui concerne une machine électrique, il serait préférable de recharger la batterie d'accumulateurs lorsque le moteur tourne au ralenti, plutôt que de prélever pour cela de la puissance au moteur lorsque celle-ci est nécessaire pour propulser le véhicule.

On a déjà développé des dispositifs de transmission à plusieurs rapports pour pallier les inconvénients ci-dessus. Toutefois, ces dispositifs de transmission sont pilotés par l'électronique du moteur ou même du véhicule, en fonction d'indications données par des capteurs. En outre, des actionneurs électriques ou hydrauliques sont nécessaires. Au total, le dispositif de transmission de type connu est complexe et son interconnexion avec le réseau électronique du véhicule est une source potentielle de pannes complexes.

Le DE-A-2 303 562 décrit un dispositif conforme au préambule de la revendication 1, comprenant un embrayage de prise directe dont l'organe menant est entrainé par une liaison vis-écrou qui fait partie du moyen stabilisateur. Lorsque l'embrayage est en prise, la force axiale générée par la liaison vis-écrou agit sur des patins de l'embrayage, pour tendre à maintenir l'embrayage à l'état de prise. Des masselottes centrifuges tendent au contraire à désengager l'embrayage.

Le GB 795 019 et le FR 2 668 231 décrivent des dispositifs de transmissions pour entrainer le véhicule lui-même, et non pas par un accessoire ou auxiliaire dans le véhicule.

Le EP 0 314 214 et le US 5 011 463 décrivent des transmissions pour appareil accessoire qui ne font pas intervenir des forces qui varient en fonction du couple transmis.

Le but de la présente invention est de remédier à ces inconvénients et en particulier de présenter un dispositif de transmission qui réponde aux besoins de manière essentiellement autonome.

Suivant l'invention, le dispositif de transmission à au moins deux rapports pour entraîner un appareil à partir d'un moteur à vitesse variable, tel qu'un moteur de véhicule, comprenant un mécanisme à engrenage, un moyen d'accouplement sélectif capable de deux états correspondant à un rapport de transmission bas et à un rapport de transmission haut dans lequel l'appareil est entraîné à plus grande vitesse que dans le rapport de transmission bas pour une même vitesse de rotation du moteur, au moins un moyen générateur de force, pour générer une force d'actionnement variable, un moyen stabilisateur pour générer une force stabilisatrice variant en fonction d'un couple de rotation dans le dispositif, et au moins un moyen de sollicitation pour appliquer la force d'actionnement variable et la force stabilisatrice au moyen d'accouplement sélectif, est caractérisé en ce que le moyen stabilisateur comprend un organe denté du mécanisme à engrenage et en ce que cet organe denté est déchargé dans l'un des deux états du moyen d'accouplement, et subit dans l'autre état du moyen d'accouplement un mouvement relatif d'engrènement sous charge avec génération d'une pression de denture ayant une composante constituant la force stabilisatrice.

Suivant un second aspect, l'invention vise diverses applications du dispositif selon le premier aspect, pour l'entraînement d'un compresseur de suralimentation du moteur, pour l'entraînement d'un compresseur de climatisation de véhicule automobile à partir du moteur de propulsion du véhicule automobile, ou encore pour la liaison entre une machine électrique et l'arbre du moteur de propulsion du véhicule automobile.

En outre, l'invention concerne un moteur thermique équipé d'un compresseur de suralimentation, caractérisé en ce que le compresseur de suralimentation est entraîné par l'arbre du moteur via un dispositif de transmission selon le premier aspect.

D'autres particularités et avantages de l'invention ressortiront encore de la description ci-après, relative à des exemples non limitatifs.

Aux dessins annexés ;
- la figure 1 est une vue schématique en perspective d'un moteur selon l'invention ;
- la figure 2 est une vue du dispositif de transmission entraînant le compresseur du moteur de la figure 1, en coupe axiale ;
- les figures 3 et 4 sont des vues analogues à la figure 1 mais montrant l'application du dispositif selon l'invention à l'entraînement d'une machine électrique et respectivement d'un compresseur de climatisation.

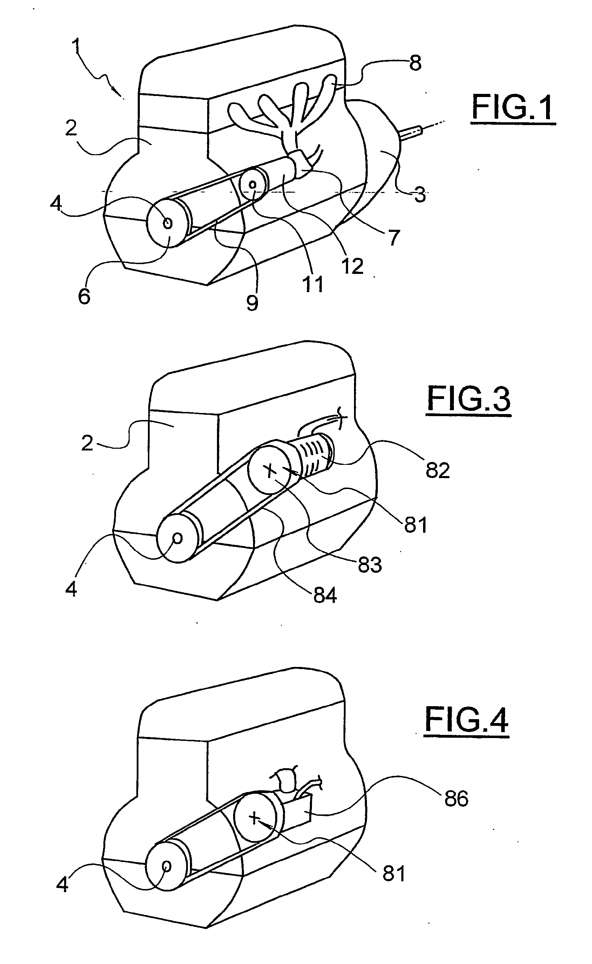

Dans l'exemple représenté à la figure 1, le moteur thermique suralimenté 1 comprend un moteur thermique 2 typiquement du type à pistons ayant un arbre moteur dont une extrémité non représentée est reliée à une boîte de vitesses 3 et l'autre extrémité 4 porte au moins une poulie 6 d'entraînement d'accessoires et auxiliaires. Dans la représentation très simplifiée de la figure 1, aucun accessoire n'est représenté, et un seul auxiliaire est représenté, à savoir un compresseur de suralimentation 7 qui comprime l'air envoyé dans la tubulure d'admission 8 du moteur 2. En pratique, le trajet de l'air entre le compresseur 7 et la tubulure 8 peut être plus compliqué que représenté et passer notamment par un inter-refroidisseur pour débarrasser l'air comprimé des calories excédentaires générées par la compression.

Le compresseur 7 est entraîné par une courroie 9 reliant la poulie 6 à une poulie menée 11. La poulie 11 entraîne le compresseur 7 par l'intermédiaire d'un dispositif de transmission à trois rapports 12 selon l'invention.

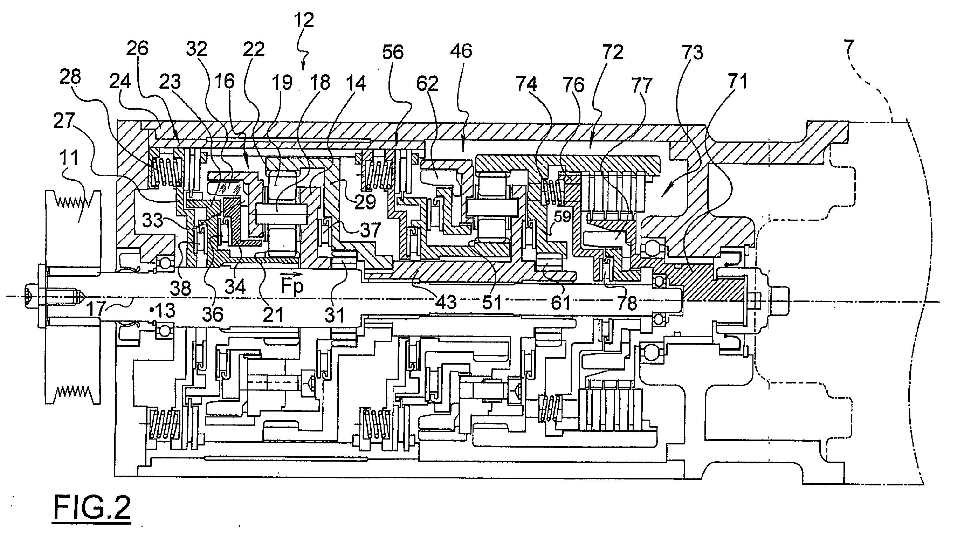

La poulie 11 (Figure 2) est clavetée sur un arbre d'entrée 13 du dispositif, lequel est solidaire d'un porte-satellites 14 d'un premier mécanisme différentiel 16 réalisé sous la forme d'un train épicycloïdal. Le porte-satellites 14 présente de manière répartie autour de l'axe général 17 du dispositif de transmission, des tourillons 18 sur lesquels des satellites 19 peuvent tourner librement. Les satellites 19 engrènent d'une part avec une roue planétaire 21 du mécanisme 16, située radialement à l'intérieur des satellites, et une couronne dentée 22 située radialement à l'extérieur des satellites. La roue planétaire 21 est solidaire d'un disque 23 qui peut être sélectivement solidarisé avec le carter 24 du dispositif de transmission par un moyen d'accouplement sélectif constitué par un embrayage à friction 26. L'embrayage 26 comprend un organe de serrage 27 qui est immobilisé en rotation par rapport au carter 24 et qui est mobile axialement par rapport au carter 24 sous la poussée d'un ressort de compression 28 qui tend à serrer l'embrayage 26 et donc à immobilier la roue planétaire 21 relativement au carter 24.

La couronne dentée 22 est solidaire d'une cloche 29 qui constitue la sortie d'un premier module du dispositif de transmission. Cette sortie est empêchée de tourner moins vite que l'entrée du module, constituée par l'arbre d'entrée 13, au moyen d'une roue libre 31 ou accouplement unidirectionnel, installée entre l'arbre 13 et la cloche 29.

Le porte-satellites 14 entraîne en rotation des masselottes centrifuges 32 qui portent chacune une came 33. Lorsque sous l'effet de la force centrifuge les masselottes 32 pivotent radialement vers l'extérieur, leur came 33 pivote dans le sens horaire à la figure 2 ce qui tend à pousser vers la gauche de la figure 2, par rapport au porte-satellites 14, un coulisseau 34 entraîné en rotation par le porte-satellite 14 et appuyé par un butée axiale 36 sur le disque 23 solidaire de la roue planétaire 21.

Le mécanisme différentiel 16 est à dentures hélicoïdales. En conséquence, la pression de denture a non seulement une composante circonférentielle permettant la transmission au couple, mais également une composante axiale qui est opposée dans la roue planétaire 21 et dans la couronne dentée 22, tandis que les satellites 19 subissent des forces qui s'équilibrent. Dans la réalisation selon la figure 2, l'inclinaison des dents est choisie en relation avec le sens du couple moteur à transmettre pour que la roue planétaire 21 soit sollicitée axialement dans le sens de la flèche Fp qui comprime la butée axiale 36 et tend par conséquent à empêcher les masselottes 32 de se soulever. Par conséquent, la poussée axiale dans la couronne dentée 22 est dirigée vers la gauche de la figure 2, elle est absorbée par une butée axiale 37 par laquelle la cloche 29 s'appuie contre le porte-satellites 14, lequel est solidaire de l'arbre 13 retenu axialement dans ses paliers relativement au carter 24.

En outre, du côté opposé à la buté axiale 36, le disque 23 est appuyé axialement contre l'organe de serrage 27 par l'intermédiaire d'une autre butée axiale 38.

Le fonctionnement du premier module qui vient ainsi d'être décrit est le suivant.

Au repos, les ressorts 28 serrent l'embrayage 26 de sorte que la roue planétaire 21 est immobilisée. Lorsque la vitesse de rotation de l'arbre 13 est faible, la force centrifuge des masselottes 32, qui est proportionnelle au carré de la vitesse de rotation de l'arbre d'entrée 13, est elle-même très faible et par conséquent les masselottes 32 sont empêchées de se soulever par la force des ressorts 28 et la force axiale de denture F_{P}, qui agissent par l'intermédiaire de la butée 36 et du coulisseau 34. Le module démarre donc avec la roue planétaire 21 à l'arrêt, de sorte que la rotation du porte-satellites 14 avec l'arbre d'entrée 13 provoque une rotation à vitesse accrue de la couronne dentée 22 et par conséquent de la cloche de sortie 29. Si la vitesse de l'arbre d'entrée 13 atteint un certain seuil haut qui est d'autant plus élevé que le couple à transmettre, tel que mesuré par la force axiale F_{P}, est élevé, les masselottes 32 tendent à se soulever en poussant vers la gauche le disque 23 à l'encontre de la force F_{P}. Le disque 23 tend à son tour à pousser, par l'intermédiaire de la butée 38, l'organe de serrage 27 dans le sens du desserrage de l'embrayage 26 à l'encontre des ressorts de précontrainte 28. En conséquence, l'embrayage 26 se met à glisser, la roue planétaire 21 est libérée, elle se met à tourner dans le même sens que la porte-satellites 14 et que la cloche 29, tandis que la vitesse de rotation de la cloche 29 diminue. Lorsque cette vitesse devient égale à la vitesse de l'arbre d'entrée 13, la roue libre 31 accouple directement l'arbre d'entrée 13 avec la cloche 29. Le couple n'est plus transmis par le mécanisme différentiel 16, la pression de denture et avec elle la force axiale F_{P} s'annulent de sorte que les masselottes 32 sont maintenant libres pour desserrer positivement l'embrayage 26 et le changement de rapport qui vient de s'opérer est stabilisé. Le module est passé automatiquement d'un rapport de surmultiplication à un rapport de prise directe.

Le retour au rapport de surmultiplication a lieu lorsque la vitesse de rotation descend en dessous d'un seuil bas, nettement inférieur au seuil haut ayant déclenché le passage en prise directe. Lorsque le seuil bas est atteint, les ressorts de précontrainte 28 ont une force suffisante pour pousser l'organe de serrage 27 dans le sens du serrage de l'embrayage 26 à l'encontre de la force d'origine centrifuge générée par les masselottes 32.

Le frottement dans l'embrayage 26 rétablit une certaine transmission de couple à travers les dentures, puis même la transmission de la totalité du couple lorsque ce frottement suffit à faire ralentir la roue planétaire 21 et donc à faire accélérer la cloche 29 au-delà de la vitesse imposée par la roue libre 31. En conséquence, cette dernière devient inactive pour la transmission de couple. La réapparition d'un couple dans les dentures 21 fait réapparaître la force axiale F_{P} qui, en venant réduire ou même supprimer le déplacement radial des masselottes 32 par l'intermédiaire de la butée axiale 36, vient en même temps aider le ressort 28 à rétablir les conditions faisant fonctionner le mécanisme 16 en son rapport de surmultiplication.

La cloche 29 est liée en rotation à un arbre tubulaire 43 monté librement rotatif autour de l'arbre d'entrée 13, lequel s'étend à travers tout le dispositif en lui servant de support axial. L'arbre tubulaire 43 est l'arbre d'entrée d'un second mécanisme différentiel 46, qui se trouve donc monté mécaniquement en série avec le premier mécanisme 16. Le second mécanisme 46 est fonctionnellement identique au premier mécanisme 16 et il ne sera donc pas redécrit en détail. Il est capable, comme le mécanisme 16 et dans des conditions en principe similaires, d'établir soit un rapport de prise directe soit un rapport de surmultiplication entre son organe d'entrée 43 et une cloche de sortie 59. D'une manière générale, les références numériques utilisées pour ce second mécanisme 46 sont augmentées de trente par rapport à celles utilisées pour les éléments homologues du premier mécanisme 16. Pour la prise directe, la cloche 59 est couplée avec l'arbre tubulaire d'entrée 43 par une roue libre 61. Pour le fonctionnement en surmultiplication, un moyen d'accouplement sélectif 56, constitué par un embrayage à friction, empêche la roue planétaire 51 de tourner par rapport au carter 24. Le rapport de nombre de dents entre la couronne dentée et la roue planétaire est plus proche de 1 dans le mécanisme 46 que dans le mécanisme 16. Ainsi, dans le second mécanisme 46 le saut entre les deux rapports est moins grand.

La cloche 59 constituant l'organe de sortie du deuxième module 46, est reliée à un arbre de sortie 71 du dispositif de transmission 12 par l'intermédiaire d'un moyen d'accouplement sélectif 72, constitué par un embrayage multi-disques à bain d'huile, faisant partie d'un dispositif de sécurité 73 protégeant l'arbre de sortie 71 et par conséquent le compresseur 7 à l'encontre des survitesses. L'embrayage 72 est normalement serré par des ressorts de compression 74 qui le mettent sous précontrainte. Les ressorts 74 agissent par l'intermédiaire d'un poussoir de serrage 76 qui peut être repoussé dans le sens du desserrage de l'embrayage 72, à l'encontre des ressorts 74, par des masselottes centrifuges 77 soumises à la vitesse de rotation de l'arbre de sortie 71 et agissant sur l'organe de serrage 76 par l'intermédiaire d'une butée axiale 78. La butée axiale 78 est nécessaire car l'organe de serrage 76 tourne avec la cloche 59, donc à une vitesse différente de l'arbre de sortie 71 lorsque l'embrayage 72 est desserré.

Le fonctionnement global du dispositif de transmission de la figure 2 est le suivant.

A faible vitesse, les deux mécanismes différentiels 16, 46 fonctionnent en surmultiplication. La vitesse de l'arbre d'entrée 43 dans le second mécanisme, dont sont solidaires les masselottes 62 de ce second mécanisme, est donc supérieure à celle de l'arbre 13 entraînant les masselottes 32 du premier mécanisme. Par conséquent, lorsque la vitesse de rotation de l'arbre 13 augmente, ce sont d'abord les masselottes 62 du second mécanisme 46 qui provoquent le passage de celui-ci en prise directe. Si la vitesse de l'arbre d'entrée 13 continue d'augmenter, le premier mécanisme 16 passe à son tour en prise directe.

On a donc réalisé un dispositif de transmission qui tend à réguler la vitesse de fonctionnement du compresseur 7 pour la rendre moins dépendante de la vitesse de rotation de l'arbre du moteur, de façon que le compresseur 7 fonctionne le plus souvent possible à son régime optimal et en particulier avec une efficacité nettement améliorée pour les bas régimes de rotation du moteur.

Les moyens d'accouplement sélectifs 26, 56 sont des embrayages à friction à bain d'huile permettant un changement souple des rapports de transmission, sans à-coups.

Les masselottes 32, 62 produisent à partir de la force centrifuge une force axiale qui est sensiblement proportionnelle au carré de la vitesse de rotation subie par les masselottes. Ainsi, on est sûr que l'augmentation de la force d'origine centrifuge n'est pas totalement contrebalancée par une augmentation du couple résistant de l'appareil entraîné en fonction de sa vitesse de rotation.

Dans l'exemple de la figure 3, un dispositif 81 selon l'invention est utilisé pour entraîner une machine électrique 82 associée au moteur 2. Le dispositif 81 est un dispositif à deux rapports entièrement logé à l'intérieur d'une coupelle 83 qui est solidaire de l'élément d'entrée du dispositif de transmission et dont la périphérie forme poulie pour la courroie 84 de transmission entre cette poulie et l'arbre 4 du moteur 2. La machine électrique 82 peut être une génératrice pour recharger une batterie d'accumulateurs, ou encore une génératrice avec fonction de démarreur et/ou avec fonction de machine motrice auxiliaire ajoutant sa puissance à celle du moteur 2. Lorsque la machine 82 fonctionne en moteur, la réaction de denture telle que F_{P} à la figure 2 est inversée mais par contre la force centrifuge est relativement faible de sorte que l'ensemble peut être calculé pour que le fonctionnement en surmultiplication (qui est donc un fonctionnement en démultiplication lorsque l'on considère la machine 82 comme motrice), soit possible.

Dans l'exemple représenté à la figure 4, un dispositif de transmission 81 analogue à celui représenté à la figure 3 sert à entraîner un compresseur de climatisation 86. Là encore, lorsque la vitesse de rotation de l'arbre 4 du moteur devient faible, le dispositif 81 passe en rapport surmultiplié et augmente la puissance frigorifique du compresseur 86.

Bien entendu, l'invention n'est pas limitée aux exemples décrits et représentés.

L'invention n'est pas limitée à l'établissement de rapports de surmultiplication et de prise directe.

## Revendications

1. Dispositif de transmission à au moins deux rapports pour entraîner un appareil (7, 82, 86) à partir d'un moteur à vitesse variable (2), tel qu'un moteur de véhicule, comprenant :
- un mécanisme à engrenage (16, 46) ;
- un moyen d'accouplement sélectif (26, 56) capable de deux états correspondant à un rapport de transmission bas et à un rapport de transmission haut dans lequel l'appareil est entraîné à plus grande vitesse que dans le rapport de transmission bas pour une même vitesse de rotation du moteur,
- au moins un moyen générateur de force (32, 62) pour générer une force d'actionnement variable ;
- un moyen stabilisateur (21, 51) pour générer une force stabilisatrice (Fp) variant en fonction d'un couple de rotation dans le dispositif, et
- au moins un moyen de sollicitation (34, 36, 23, 38) pour appliquer la force d'actionnement variable et la force stabilisatrice au moyen d'accouplement sélectif (26, 56), **caractérisé en ce que** le moyen stabilisateur comprend un organe denté (21, 51) du mécanisme à engrenage et **en ce que** cet organe denté est déchargé dans l'un des deux états du moyen d'accouplement, et subit dans l'autre état du moyen d'accouplement un mouvement relatif d'engrènement sous charge avec génération d'une pression de denture ayant une composante (Fp) constituant la force stabilisatrice.

2. Dispositif selon la revendication 1, **caractérisé en ce que** le mécanisme à engrenage est un mécanisme différentiel (16, 46) qui fonctionne en prise directe dans l'un des deux états du moyen d'accouplement sélectif (26, 56), et **en ce que** la denture (21, 51) est inactive pour la transmission de couple lors du fonctionnement en prise directe.

3. Dispositif selon la revendication 1 ou 2, **caractérisé en ce que** le moyen d'accouplement sélectif (26) est à l'état désaccouplé lors du fonctionnement en prise directe.

4. Dispositif selon l'une des revendications 1 à 3, **caractérisé en ce que** la force stabilisatrice (Fp) tend à placer le moyen d'accouplement sélectif à l'état accouplé.

5. Dispositif selon l'une des revendications 1 à 4, **caractérisé en ce que** la composante (Fp) constituant la force stabilisatrice est la composante axiale de la pression d'une denture hélicoïdale de l'organe denté (21, 51).

6. Dispositif selon l'une des revendications 1 à 5, **caractérisé en ce que** le moyen générateur de force comprend un moyen centrifuge (32, 62) et l'au moins un moyen de sollicitation applique la force d'origine centrifuge dans le sens tendant à mettre le moyen d'accouplement sélectif (26, 56) dans son état correspondant à un rapport de transmission bas.

7. Dispositif selon la revendication 6, **caractérisé en ce que** le moyen centrifuge (32, 62) est soumis à une vitesse de rotation de l'entrée du mécanisme à engrenage (16, 46).

8. Dispositif selon l'une des revendications 1 à 7, **caractérisé en ce que** le rapport de transmission bas est un rapport de prise directe et le rapport de transmission haut est un rapport de surmultiplication.

9. Dispositif selon la revendication 8, **caractérisé en ce que** le moyen d'accouplement sélectif (26, 56) est un embrayage d'immobilisation sélective d'un organe de réaction (21, 51) du mécanisme d'engrenage (16, 46) de type différentiel.

10. Dispositif selon l'une des revendications 1 à 9, **caractérisé en ce qu'**il comprend un accouplement unidirectionnel (31, 61) empêchant un organe de sortie (29, 59) de tourner moins vite qu'un organe d'entrée (13, 43) lorsque le moyen d'accouplement sélectif (26, 56) est à l'état désaccouplé.

11. Dispositif selon l'une des revendications 1 à 9, **caractérisé en ce que** le moyen d'accouplement sélectif (26, 56) est à l'état serré pour le fonctionnement selon le rapport haut, et peut à partir de l'état serré, lorsque le couple à transmettre dépasse un seuil, autoriser un glissement jusqu'au retour au rapport bas défini par un accouplement unidirectionnel (31, 61).

12. Dispositif selon l'une des revendications 1 à 11, **caractérisé en ce qu'**un organe de serrage (27), du moyen d'accouplement sélectif est sollicité par une résultante d'efforts provenant de :
- au moins un ressort (28) tendant à mettre le moyen d'accouplement sélectif (28, 58) à l'état accouplé ;
- un organe (34) soumis à une force d'origine centrifuge, constituant la force d'actionnement variable, et tendant à mettre le moyen d'accouplement sélectif (28, 58) à l'état désaccouplé
- un organe (23) soumis à la force stabilisatrice (Fp), favorisant l'état accouplé.

13. Dispositif selon la revendication 12, **caractérisé en ce que** l'organe (34) soumis à une force d'origine centrifuge s'appuie sur l'organe de serrage (27) par l'intermédiaire de l'organe (23) soumis à la force stabilisatrice, en particulier la composante axiale de pression de denture (Fp).

14. Dispositif selon la revendication 12 ou 13, **caractérisé en ce que** le moyen d'accouplement sélectif (26, 56) accouple sélectivement un carter (24) du dispositif avec l'organe (33) soumis à la force stabilisatrice.

15. Dispositif selon l'une des revendications 1 à 14, **caractérisé en ce qu'**il comprend deux sous-ensembles (16, 46) à deux rapports chacun, montés en série.

16. Dispositif selon l'une des revendications 1 à 15, **caractérisé en ce qu'**il comprend en sortie un embrayage de sécurité à commande centrifuge (73) pour débrayer la sortie (71) du dispositif en cas de survitesse à la sortie.

17. Dispositif selon l'une des revendications 1 à 16, **caractérisé en ce qu'**il comprend un organe d'entrée en forme de poulie (83) formant coupelle enveloppant au moins partiellement le dispositif.

18. Application du dispositif selon l'une des revendications 1 à 17 à l'entraînement d'un compresseur (7) de suralimentation du moteur.

19. Moteur thermique équipé d'un compresseur de suralimentation (7), **caractérisé en ce que** le compresseur de suralimentation (7) est entraîné par l'arbre (4) du moteur (2) via un dispositif de transmission (12) selon l'une des revendications 1 à 17.

20. Application du dispositif selon l'une des revendications 1 à 17 à l'entraînement d'un compresseur (86) de climatisation de véhicule automobile à partir du moteur (2) de propulsion du véhicule automobile.

21. Application du dispositif (81) selon l'une des revendications 1 à 17 à la liaison d'une machine électrique (82) avec le moteur de propulsion (2) du véhicule automobile.

## Claims

1. A transmission device with at least two ratios for driving an apparatus (7, 82, 86) by a variable-speed engine (2), such as a vehicle engine, comprising:
- a gear train (16, 46);
- a selective coupling means (26, 56) capable of two states corresponding to a low gear ratio and to a high gear ratio in which the apparatus is driven at a higher speed than in the low gear ratio for a same rotation speed of the engine,
- at least one force generating means (32, 62) to generate a variable actuating force;
- a state-stabilizing means (21, 51) to generate a state-stabilizing force (Fp) that varies depending on a rotation torque in the device, and
- at least one urging means (34, 36, 23, 38) to apply the variable actuating force and the state-stabilizing force to the selective coupling means (26, 56),
**characterized in that** the state-stabilizing means comprises a toothed means (21, 51) of the gear mechanism and **in that** this toothed means is unloaded in one of the two states of the coupling means and is subjected in the other state of the coupling means to a relative meshing movement under load with generation of a teeth pressure having a component (Fp) constituting the state-stabilizing force.

2. A device according to claim 1, **characterized in that** the gear mechanism is a differential mechanism (16, 46) which operates in direct drive in one of the two states of the selective coupling means (26, 56), and **in that** the set of teeth (21, 51) is inactive for torque transmission during direct drive operation.

3. A device according to claim 1 or 2, **characterized in that** the selective coupling means (26) is in the disengaged state during direct drive operation.

4. A device according to one of the claims 1 to 3, **characterized in that** the state-stabilizing force (Fp) tends to put the selective coupling means in the engaged state.

5. A device according to one of claims 1 to 4, **characterized in that** the component (Fp) constituting the state-stabilizing force is the axial component of the pressure of a helical set of teeth of the toothed means (21, 51).

6. A device according to one of the claims 1 to 5, **characterized in that** the force generating means comprises a centrifuge means (32, 62) and the at least one urging means applies the centrifugally produced force in the direction tending to put the selective coupling means (26, 56) in its state corresponding to a low transmission ratio.

7. A device according to claim 6, **characterized in that** the centrifuge means (32, 62) is subjected to a rotation speed at the input of the gear train (16, 46).

8. A device according to one of claims 1 to 7, **characterized in that** the low gear ratio is a direct drive ratio and the high gear ratio is an overdrive ratio.

9. A device according to claim 9, **characterized in that** the selective coupling means (26, 56) is a clutch for selective immobilization of a reaction element (21, 51) of the gear train of differential type.

10. A device according to one of the claims 1 to 9, **characterized in that** said device comprises a one-way clutch (31, 61) preventing an output element (29, 59) from turning slower than an input element (13, 43) when the selective coupling means (26, 56) is in the disengaged state.

11. A device according to one of claims 1 to 9, **characterized in that** the selective coupling means (26, 56) is in the clutched state for operation in the high ratio, and, from the clutched state, when the torque to be transmitted exceeds a threshold, can allow a sliding until re-establishing the low ratio defined by a one-way clutch.

12. A device according to one of claims 1 to 11, **characterized in that** a clamping element (27) of the selective coupling means is acted upon by a resultant of forces originating from:
- at least one spring (26) tending to put the selective coupling means (28, 58) in the engaged state;
- an element (34) subjected to a centrifugally produced force, constituting the variable actuating force and tending to put the selective coupling means (28, 58) in the disengaged state;
- an element (23) subjected to the state-stabilizing force (Fp) promoting the engaged state.

13. A device according to claim 12, **characterized in that** the element (34) subjected to a centrifugally produced force bears onto the clamping element (27) by way of the element (23) subjected to the state-stabilizing force, in particular the axial component of the set of teeth thrust (Fp).

14. A device according to claim 12 or 13, **characterized in that** the selective coupling means (26, 56) selectively couples a case (24) of the device with the element (33) subjected to the state-stabilizing force.

15. A device according to one of claims 1 to 14, **characterized by** comprising two sub-assemblies (16, 46) each with two ratios, mounted in series.

16. A device according to one of claims 1 to 15, **characterized by** comprising at the output a safety clutch with centrifugal control (73) for declutching the output (71) of the device in case of an overspeed at the output.

17. A device according to one of claims 1 to 16, **characterized by** comprising an input element in the form of a pulley (83) forming a cup at least partially enclosing the device.

18. A use of the device according to one of claims 1 to 17 for driving an engine supercharging compressor (7).

19. A heat engine equipped with a supercharging compressor (7), **characterized in that** the supercharging compressor (7) is driven by the shaft (4) of the engine (2) via a transmission device (12) according to one of claims 1 to 17.

20. A use of the device according to one of claims 1 to 17 for driving a motor vehicle air-conditioning compressor (86) from the propulsion engine (2) of the motor vehicle.

21. A use of the device (81) according to one of claims 1 to 17 for connecting an electric machine (82) to the propulsion engine (2) of the motor vehicle.

## Patentansprüche

1. Getriebevorrichtung mit mindestens zwei Übersetzungsverhältnissen, um ein Gerät (7, 82, 86) ausgehend von einem Motor mit variabler Geschwindigkeit (2), wie einem Fahrzeugmotor, anzutreiben, die enthält:
- einen Zahnradgetriebe-Mechanismus (16, 46);
- eine selektive Kopplungseinrichtung (26, 56), die zwei Zustände entsprechend einem niederen Übersetzungsverhältnis und einem hohen Übersetzungsverhältnis einnehmen kann, bei dem das Gerät bei gleicher Drehgeschwindigkeit des Motors mit größerer Geschwindigkeit angetrieben wird als beim niederen Übersetzungsverhältnis;
- mindestens eine Krafterzeugungseinrichtung (32, 62), um eine variable Betätigungskraft zu erzeugen;
- eine Stabilisierungseinrichtung (21, 51), um eine stabilisierende Kraft (F_{P}) zu erzeugen, die in Abhängigkeit von einem Drehmoment in der Vorrichtung variiert; und
- mindestens eine Beaufschlagungseinrichtung (34, 36, 23, 38), um die variable Betätigungskraft und die stabilisierende Kraft an die selektive Kopplungseinrichtung (26, 56) anzuwenden,
**dadurch gekennzeichnet, dass** die stabilisierende Einrichtung ein gezahntes Organ (21, 51) des Zahnradgetriebe-Mechanismus enthält, und dass dieses gezahnte Organ in einem der zwei Zustände der Kopplungseinrichtung entlastet wird und im anderen Zustand der Kopplungseinrichtung eine relative Zahneingriffsbewegung unter Last mit Erzeugung eines Zahnungsdrucks erfährt, der eine Komponente (Fp) hat, die die stabilisierende Kraft bildet.

2. Vorrichtung nach Anspruch 1, **dadurch gekennzeichnet, dass** der Zahnradgetriebe-Mechanismus ein Differentialmechanismus (16, 46) ist, der in einem der zwei Zustände der selektiven Kopplungseinrichtung (26, 56) mit direktem Eingriff arbeitet, und dass die Zahnung (21, 51) für die Drehmomentübertragung beim Betrieb mit direktem Eingriff inaktiv ist.

3. Vorrichtung nach Anspruch 1 oder 2, **dadurch gekennzeichnet, dass** die selektive Kopplungseinrichtung (26) beim Betrieb mit direktem Eingriff im entkoppelten Zustand ist.

4. Vorrichtung nach einem der Ansprüche 1 bis 3, **dadurch gekennzeichnet, dass** die stabilisierende Kraft (Fp) darauf abzielt, die selektive Kopplungseinrichtung in den gekoppelten Zustand zu versetzen.

5. Vorrichtung nach einem der Ansprüche 1 bis 4, **dadurch gekennzeichnet, dass** die die stabilisierende Kraft bildende Komponente (Fp) die axiale Komponente des Drucks einer Spiralverzahnung des gezahnten Organs (21, 51) ist.

6. Vorrichtung nach einem der Ansprüche 1 bis 5, **dadurch gekennzeichnet, dass** die Krafterzeugungseinrichtung eine Zentrifugaleinrichtung (32, 62) aufweist, und die mindestens eine Beaufschlagungseinrichtung die Kraft mit zentrifugalem Ursprung dahingehend anwendet, die selektive Kopplungseinrichtung (26, 56) in ihren Zustand zu versetzen, der einem niederen Übersetzungsverhältnis entspricht.

7. Vorrichtung nach Anspruch 6, **dadurch gekennzeichnet, dass** die Zentrifugaleinrichtung (32, 62) einer Drehgeschwindigkeit des Eingangs des Zahnradgetriebe-Mechanismus (16, 46) ausgesetzt ist.

8. Vorrichtung nach einem der Ansprüche 1 bis 7, **dadurch gekennzeichnet, dass** das niedere Übersetzungsverhältnis ein Übersetzungsverhältnis mit direktem Eingriff und das hohe Übersetzungsverhältnis ein Overdrive-Übersetzungsverhältnis ist.

9. Vorrichtung nach Anspruch 8, **dadurch gekennzeichnet, dass** die selektive Kopplungseinrichtung (26, 56) eine Kupplung mit selektiver Immobilisierung eines Reaktionsorgans (21, 51) des Zahnradgetriebe-Mechanismus (16, 46) vom Differentialtyp ist.

10. Vorrichtung nach einem der Ansprüche 1 bis 9, **dadurch gekennzeichnet, dass** sie eine Einwegkopplung (31, 61) enthält, die ein Ausgangsorgan (29, 59) daran hindert, weniger schnell zu drehen als ein Eingangsorgan (13, 43), wenn die selektive Kopplungseinrichtung (26, 56) im entkoppelten Zustand ist.

11. Vorrichtung nach einem der Ansprüche 1 bis 9, **dadurch gekennzeichnet, dass** die selektive Kopplungseinrichtung (26, 56) für den Betrieb gemäß dem hohen Übersetzungsverhältnis im eingespannten Zustand ist, und ausgehend vom eingespannten Zustand, wenn das zu übertragende Drehmoment einen Schwellwert überschreitet, ein Gleiten bis zur Rückkehr in das niedere Übersetzungsverhältnis erlauben kann, das durch eine Einwegkopplung (31, 61) definiert wird.

12. Vorrichtung nach einem der Ansprüche 1 bis 11, **dadurch gekennzeichnet, dass** ein Einspannorgan (27) der selektiven Kopplungseinrichtung von einer Kräfteresultierenden beaufschlagt wird, die kommt von:
- mindestens einer Feder (28), die darauf abzielt, die selektive Kopplungseinrichtung (28, 58) in den gekoppelten Zustand zu versetzen;
- einem Organ (34), das einer Kraft mit zentrifugalem Ursprung ausgesetzt wird, die die variable Betätigungskraft bildet, und darauf abzielt, die selektive Kopplungseinrichtung (28, 58) in den entkoppelten Zustand zu versetzen,
- einem Organ (23), das der stabilisierenden Kraft (Fp) ausgesetzt ist, die den gekoppelten Zustand begünstigt.

13. Vorrichtung nach Anspruch 12, **dadurch gekennzeichnet, dass** das einer Kraft mit zentrifugalem Ursprung ausgesetzte Organ (34) sich über das der stabilisierenden Kraft, insbesondere der axialen Zahnungsdruckkomponente (Fp), ausgesetzte Organ (23) auf das Einspannorgan (27) auflegt.

14. Vorrichtung nach Anspruch 12 oder 13, **dadurch gekennzeichnet, dass** die selektive Kopplungseinrichtung (26, 56) selektiv ein Gehäuse (24) der Vorrichtung mit dem der stabilisierenden Kraft ausgesetzten Organ (33) koppelt.

15. Vorrichtung nach einem der Ansprüche 1 bis 14, **dadurch gekennzeichnet, dass** sie zwei in Reihe geschaltete Teileinheiten (16, 46) mit je zwei Übersetzungsverhältnissen enthält.

16. Vorrichtung nach einem der Ansprüche 1 bis 15, **dadurch gekennzeichnet, dass** sie am Ausgang eine Sicherheitskupplung mit Zentrifugalsteuerung (73) enthält, um den Ausgang (71) der Vorrichtung im Fall einer Übergeschwindigkeit am Ausgang zu entkuppeln.

17. Vorrichtung nach einem der Ansprüche 1 bis 16, **dadurch gekennzeichnet, dass** sie ein Eingangsorgan in Form einer eine Schale bildenden Riemenscheibe (83) enthält, die die Vorrichtung zumindest zum Teil umhüllt.

18. Anwendung der Vorrichtung nach einem der Ansprüche 1 bis 17 für den Antrieb eines Aufladers (7) des Motors.

19. Wärmekraftmotor, der mit einem Auflader (7) ausgestattet ist, **dadurch gekennzeichnet, dass** der Auflader (7) von der Welle (4) des Motors (2) über eine Getriebevorrichtung (12) nach einem der Ansprüche 1 bis 17 angetrieben wird.

20. Anwendung der Vorrichtung nach einem der Ansprüche 1 bis 17 für den Antrieb eines Klimaanlage-Kompressors (86) eines Kraftfahrzeugs ausgehend vom Antriebsmotor (2) des Kraftfahrzeugs.

21. Anwendung der Vorrichtung (81) nach einem der Ansprüche 1 bis 17 für die Verbindung einer elektrischen Maschine (82) mit dem Antriebsmotor (2) des Kraftfahrzeugs.
